# EUROPÄISCHE PATENTSCHRIFT

(11) **EP 0 911 897 B1**
(45) Veröffentlichungstag und Bekanntmachung des Hinweises auf die Patenterteilung: **10.01.2001**
(21) Anmeldenummer: 98117308.1
(22) Anmeldetag: 12.09.1998
(51) Int. Cl.: H01M 8/06, B01J 8/02, C01B 3/58, C01B 3/38

(54) **Anlage zur Wasserdampfreformierung eines Kohlenwasserstoffs,insbesondere von Methanol, und zur Kohlenmonoxid-Reduktion, und Betriebsverfahren hierfür**
Apparatus for steam reforming of a hydrocarbon fuel, in particular methanol, and for carbon monoxide reduction, and process therefor
Réacteur de reformage à vapeur d'eau d'un combustible hydrocarboné, notamment de méthanol, et pour la réduction du monoxyde de carbone, et son procédé d'opération

(30) Priorität: 20.10.1997 DE 19746251
(43) Veröffentlichungstag der Anmeldung: 28.04.1999
(73) Patentinhaber: XCELLSIS GmbH, 73230 Kirchheim / Teck-Nabern (DE)
(72) Erfinder: Autenrieth, Rainer, 89155 Erbach (DE)
(74) Vertreter: Kocher, Klaus-Peter Dipl.-Phys

(56) Entgegenhaltungen:
- EP-A- 0 650 922
- EP-A- 0 743 694
- EP-A- 0 798 798
- GB-A- 846 153
- PATENT ABSTRACTS OF JAPAN vol. 011, no. 167 (C-425), 28. Mai 1987 & JP 61 295205 A (KAWASAKI HEAVY IND LTD), 26. Dezember 1986
- PATENT ABSTRACTS OF JAPAN vol. 095, no. 008, 29. September 1995 & JP 07 126001 A (AQUEOUS RES:KK), 16. Mai 1995
- PATENT ABSTRACTS OF JAPAN vol. 017, no. 162 (C-1042), 30. März 1993 & JP 04 325401 A (TOYO ENG CORP), 13. November 1992
- OH S H ET AL: "CARBON MONOXIDE REMOVAL FROM HYDROGEN-RICH FUEL CELL FEEDSTREAMS BY SELECTIVE CATALYTIC OXIDATION" JOURNAL OF CATALYSIS, Bd. 142, Nr. 1, 1993, Seiten 254-262, XP002012044

## Beschreibung

Die Erfindung bezieht sich auf eine Anlage zur Wasserdampfreformierung eines Kohlenwasserstoffs mit einem Reformer sowie auf ein Betriebsverfahren hierfür. Derartige Anlagen und Betriebsverfahren hierfür werden beispielsweise im mobilen Einsatz in brennstoffzellenbetriebenen Kraftfahrzeugen zur Wasserdampfreformierung von flüssig mitgeführtem Methanol verwendet, um damit den für die Brennstoffzellen benötigten Wasserstoff bereitzustellen, so daß auf einen großvolumigen Wasserspeicher verzichtet werden kann. Gerade auch für diesen Anwendungsfall ist eine kompakte Bauform der Anlage erwünscht, die sich mit relativ geringem Gewicht und geringem Aufwand realisieren läßt und ein rasches Reagieren auf die für den Fahrzeugeinsatz typischen, häufigen Lastwechsel ermöglicht. Wünschenswert ist außerdem ein hoher Wirkungsgrad und die Fähigkeit zum schnellen Aufheizen der Anlage. Da die Wasserdampfreformierungsreaktion in einem entsprechenden, ein geeignetes Katalysatormaterial enthaltenden Reaktionsraum des Reformers endotherm verläuft, muß der Reformer im Betrieb auf einer geeigneten, erhöhten Temperatur gehalten werden.

Es sind bereits Anlagen dieser Art bekannt, bei denen zur Erzielung einer kompakten Bauform gewisse Anlagenkomponenten in ein jeweiliges gemeinsames Bauteil integriert sind. So sind in den Offenlegungsschriften JP 62138306 A, JP 63021203 A und JP 63040701 A Reformierungsanlagen beschrieben, bei denen der Reformer und ein vorgeschalteter Verdampfer in ein gemeinsames Reaktorbauteil integriert sind. Dem Reaktorbauteil ist außerdem ein Brenner zugeordnet, in welchem ein Brennstoff unter Entflammen verbrannt wird, um den Verdampfer direkt aufzuheizen. Zusätzlich kann vorgesehen sein, den Reformer durch die heißen Verbrennungsabgase des Brenners zu beheizen.

Bei einer in der Patentschrift US 5 516 344 offenbarten Reformierungsanlage ist der Reformer zusammen mit einem diesem nachgeschalteten CO-Shiftkonverter in einem gemeinsamen Bauteil integriert. Diesem Bauteil ist ein Brenner zugeordnet, der ein zugeführtes Gemisch unter Entflammung verbrennt. Mit den heißen Verbrennungsabgasen werden dann unter anderem der Reformer und der CO-Shiftkonverter aufgeheizt.

In einem in der Offenlegungsschrift EP 0 600 621 A1 offenbarten, kombinierten Reformierungs- und Shiftreaktor wird die von einer CO-Schiftstufe erzeugte Wärme in einem mit der CO-Shiftstufe in Wärmekontakt stehenden Dampferzeuger genutzt.

In der Offenlegungsschrift JP 4-325401 (A) ist eine Reformierungsreaktoranlage mit zwei seriell geschalteten Reformern beschrieben, von denen der stromaufwärtige Reformer in Wärmekontakt mit einer CO-Umwandlungsstufe steht, welcher der Ausgangsproduktstrom des stromabwärtigen Reformers zugeführt wird, so daß die im stromaufwärtigen Reformer ablaufende Dampfreformierungsreaktion von der in der CO-Umwandlungsstufe erzeugten Wärme beheizt wird.

In der Offenlegungsschrift WO 96/32188 wird allgemein vorgeschlagen, eine exotherme chemische Reaktion in einem ersten Reaktionsraum und eine endotherme chemische Reaktion in einem zweiten, mit dem ersten über eine wärmeleitende Trennwand in Wärmekontakt stehenden Reaktionsraum durchzuführen und die beiden Reaktionsräume strömungstechnisch seriell zu verbinden. Zur Durchführung von Methan- oder Methanol-Reformierungsreaktionen wird speziell vorgeschlagen, das Methan bzw. Methanol im stromaufwärtigen Reaktionsraum durch eine Oxidationsreaktion exotherm und im nachgeschalteten Reaktionssraum mittels einer Dampfreformierungsreaktion endotherm umzusetzen.

In der Offenlegungsschrift EP 0 361 648 A1 wird ein wasserstofferzeugender Reaktor beispielsweise vom Rohrbündeltyp offenbart, der eine Reformereinheit mit zwei hintereinandergeschalteten Reformerstufen und eine nachgeschaltete CO-Shifteinheit beinhaltet. Im Übergangsbereich von der ersten zur zweiten Reformerstufe wird unter Zufuhr eines sauerstoffhaltigen Gases, wie Luft, das Ausgangsproduktgas der ersten Reformerstufe teilweise verbrannt, vor allem der darin noch enthaltene Restanteil an Methan, das als zu reformierender Brennstoff eingesetzt wird, wobei der CO-Gehalt stark ansteigt. Dieser wird dann in der nachfolgenden CO-Shifteinheit wieder verringert, wobei die CO-Shifteinheit vorzugsweise in zwei hintereinanderliegende Zonen unterschiedlicher Temperatur unterteilt ist.

In der Offenlegungsschrift JP 07126001 A ist eine Anlage beschrieben, die eine Reaktorbaueinheit vom Plattenstapeltyp beinhaltet. Diese Reaktorbaueinheit enthält integriert einen Verdampfer, einen Reformer und einen CO-Oxidator, wobei diese drei Anlagenkomponenten seriell in einer Stapelquerrichtung hintereinanderliegend als eine erste Gruppe übernächster Plattenschichten angeordnet sind. Dem Verdampfer benachbart ist ein Brenner vorgesehen, in welchem ein zugeführtes Gemisch unter Entflammung verbrannt wird. Die heißen Verbrennungsabgase werden parallel zum Reformierungsgasstrom durch eine zweite Gruppe übernächster Plattenschichten des Plattenstapels, der eine Wärmeübertragerstruktur bildet, hindurchgeleitet, wobei sich diese Plattenschichten mit denjenigen der ersten Gruppe abwechseln. Dadurch heizen die Verbrennungsabgase den Verdampfer, den Reformer und den CO-Oxidator auf.

Der Erfindung liegt als technisches Problem die Bereitstellung einer Anlage der eingangs genannten Art, die sich sehr kompakt und mit relativ geringem Aufwand bauen läßt und einen hohen Wirkungsgrad sowie eine hohe Dynamik besitzt, sowie eines Verfahrens zum Betrieb einer solchen Anlage zugrunde.

Die Erfindung löst dieses Problem durch die Bereitstellung einer Anlage mit den Merkmalen des Anspruchs 1 sowie eines Betriebsverfahrens hierfür mit den Merkmalen des Anspruchs 5.

Die Anlage nach Anspruch 1 beinhaltet eine dem Reformer nachgeschaltete, mit diesem in Wärmekontakt stehende, kombinierte Oxidator/Brenner-Einheit, die während des Reformierungsreaktionsbetriebs des Reformers sowohl als CO-Oxidator wie auch gleichzeitig als katalytischer Brenner fungiert. Auf diese Weise werden die Funktionen der Entfernung von Kohlenmonoxid aus dem Reformatgas und der Beheizung des Reformers von dieser einzigen, kombinierten Oxidator/Brenner-Einheit erfüllt. Dies erlaubt für eine Anlage mit diesen Funktionen eine extrem kompakte Bauform. Durch die katalytische Brennerfunktion kann mittels einer flammenlosen Verbrennung der Reformer auf der für den Reformierungsreaktionsbetrieb erforderlichen Temperatur gehalten werden. Durch die Funktion der CO-Oxidation kann die CO-Konzentration im Reformatgas auf einen gewünschten Wert verringert werden, was beispielsweise bei Verwendung des im wesentlichen aus Wasserstoff bestehenden Reformatgasstroms für die Speisung der Anodenseite eines Brennstoffzellensystems in einem brennstoffzellenbetriebenen Kraftfahrzeug wichtig ist, da zu hohe CO-Konzentrationen zu Schädigungen des Katalysatormaterials im Brennstoffzellensystem führen können.

Da sich die Anlage sehr kompakt bauen läßt, ist deren Platzbedarf entsprechend gering. Das geringe Volumen der Reaktorbaueinheit aus Reformer und kombinierter Oxidator/Brenner-Einheit und die daraus resultierenden kurzen Gasströmungswege ergeben eine hohe Dynamik der Anlage, so daß diese rasch auf Lastwechsel reagieren kann. Durch die geringe Gesamtmasse dieser Reaktorbaueinheit und der Benetzbarkeit ihrer Elemente ist sie bei einem Kaltstart rasch aufheizbar und daher schon nach kurzer Zeit in der Lage, den Reformierungsbetrieb mit voller Belastung durchzuführen. Indem sich die Anlage kompakt bauen läßt, ist auch ihre Oberfläche vergleichsweise gering, was wiederum die Wärmeverluste niedrig hält.

Für den Betrieb dieser Anlage eignet sich insbesondere das Verfahren nach Anspruch 5. Gemäß dieses Verfahrens wird in die kombinierte Oxidator/Brenner-Einheit ein sauerstoffhaltiges Gas mit einem Sauerstoffanteil zudosiert, der größer als der allein zur selektiven CO-Oxidation benötigte Anteil ist. Diese erhöhte Sauerstoffzudosierung hat somit zur Folge, daß durch die kombinierte Oxidator/Brenner-Einheit nicht nur eine ausreichende Oxidation von im Reformatgas enthaltenem Kohlenmonoxid bewirkt wird, was bereits mit einer gewissen Wärmeerzeugung einhergeht, sondern mit dem übrigen Sauerstoff ein geeignetes Brennstoffmaterial katalytisch flammenlos verbrannt wird. Als Brennstoffmaterial dient dabei primär der im Reformatgas enthaltene Wasserstoff sowie gegebenenfalls im Reformer nicht umgesetzter Kohlenwasserstoff. Die Sauerstoffzufuhr in die kombinierte Oxidator/BrennerEinheit wird so gesteuert oder geregelt, daß die insgesamt durch die CO-Oxidation und die katalytische Verbrennung entstehende Wärme gerade ausreicht, den Reformer auf seiner Betriebstemperatur zu halten.

Bei einer nach Anspruch 2 weitergebildeten Anlage sind der Reformer und die kombinierte Oxidator/Brenner-Einheit als Modul mit einer Wärmeübertragerstruktur in eine Reaktorbaueinheit vom Plattenstapel- und/oder Rohrbündeltyp integriert. Des weiteren sind in die Reaktorbaueinheit ein dem Reformer vorgeschalteter Verdampfer und ein mit diesem in Wärmekontakt stehender katalytischer Brenner als ein weiteres Modul mit einer Wärmeübertragerstruktur integriert. Dies realisiert eine hochintegrierte Reformierungsanlage mit Verdampfer, Reformer und CO-Oxidator sowie Beheizung von Verdampfer und Reformer durch katalytische Verbrennungsprozesse in mit diesen in Wärmekontakt stehenden Verbrennungsräumen, In einer weiteren Ausgestaltung dieser Anlage sind die beiden Module gemäß Anspruch 3 durch thermisch isolierende Elemente voneinander getrennt und damit thermisch voneinander entkoppelt angeordnet.

Bei einer nach Anspruch 4 weitergebildeten Anlage ist der kombinierten Oxidator/3renner-Einheit wenigstens eine weitere CO-Entfernungsstufe ohne Brennerfunktion nachgeschaltet, wobei durch diese wenigstens eine weitere CO-Entfernungsstufe bei Bedarf eine noch weitergehende Verringerung der CO-Konzentration im Reformatgas bewirkt werden kann.

Eine vorteilhafte Ausführungsform der Erfindung ist in den Zeichnungen dargestellt und wird nachfolgend beschrieben. Hierbei zeigen:
- Fig. 1: eine schematische Längsschnittansicht durch eine Reaktorbaueinheit vom Plattenstapeltyp für eine Anlage zur Wasserdampfreformierung eines Kohlenwasserstoffs,
- Fig. 2: eine Draufsicht auf eine für die Reaktorbaueinheit von Fig. 1 verwendbare Einzelplatte und
- Fig. 3: eine Draufsicht auf die Reaktorbaueinheit von Fig. 1.

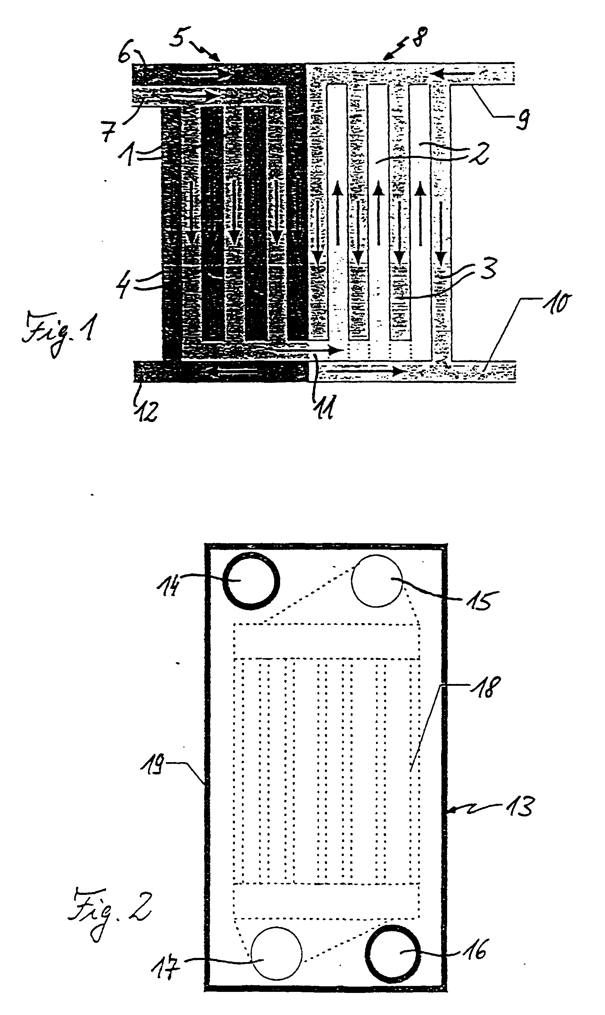

Die in Fig. 1 schematisch dargestellte Reaktorbaueinheit vom Plattenstapeltyp eignet sich als zentraler Teil einer Anlage zur Wasserdampfreformierung eines Kohlenwasserstoffs, insbesondere einer mobilen Anlage zur Wasserdampfreformierung von Methanol im Einsatz in einem brennstoffzellenbetriebenen Kraftfahrzeug, um den für die Brennstoffzellen benötigten Wasserstoff aus flüssig mitgeführtem Methanol zu erzeugen. In die Reaktorbaueinheit sind ein Verdampfer 1, ein diesem nachgeschalteter Reformer 2, eine diesem nachgeschaltete, kombinierte Oxidator/Brenner-Einheit 3 und ein katalytischer Brenner 4 integriert.

Dabei steht der katalytische Brenner 4 mit dem Verdampfer 1 in Wärmekontakt, indem diese beiden Anlagenkomponenten von einem entsprechenden Verdampfer/Brenner-Modul 5 gebildet sind, das einen Plattenstapelaufbau mit einer Wärmeübertragerstruktur besitzt. Bei dieser Struktur sind mehrere parallele Schichten des Verdampfers 1 einerseits und des Brenners 4 andererseits in alternierender Folge angeordnet und stehen über je eine wärmeleitende Plattenwandung in Wärmekontakt. Das Verdampfer/ Brenner-Modul 5 besitzt einen Brennereinlaß 6 mit zugehörigem Verteilerkanal zu den parallelen Brennerschichten und einen Verdampfereinlaß 7 mit zugehörigem Verteilerkanal zur Zuführung von Methanol und Wasser zu den parallelen Verdampferschichten. Außerdem führt von der Ausgangsseite des Brenners 4 ein Brennerauslaß 12 mit zugehörigem Sammelkanal ab.

An das Verdampfer/Brenner-Modul 5 schließt sich ein weiteres Modul 8 an, das wiederum einen Plattenstapelaufbau mit Wärmeübertragerstruktur besitzt, bei der zwei Gruppen jeweils übernächster, unter sich paralleler Plattenschichten über wärmeleitende Plattenwandungen in Wärmekontakt stehen. Dabei bildet die eine Gruppe übernächster Plattenschichten den Reformer 2, während die andere Gruppe übernächster Plattenschichten die kombinierte Oxidator/Brenner-Einheit 3 bildet. Passend dazu besitzt dieses Modul 8 einen Lufteinlaß 9 mit zugehörigem Verteilerkanal für die kombinierte Oxidator/Brenner-Einheit 3 und einen aus der kombinierten Oxidator/Brenner-Einheit 3 abführenden Reformatgasauslaß 10 mit zugehörigem Sammelkanal. Außerdem führt ein Verbindungskanal 11 mit verdampferseitigem Sammelkanal und reformerseitigem Verteilerkanal von der Ausgangsseite des Verdampfers 1 zur Eingangsseite des Reformers 2.

Bei der Reaktorbaueinheit von Fig. 1 grenzen die beiden Module 5, 8 unmittelbar aneinander an. Alternativ kann bei Bedarf zwischen den beiden Modulen 5, 8 eine thermisch isolierende Trennplatte vorgesehen sein, um die beiden Module 5, 8 thermisch zu entkoppeln.

Im Betrieb der Anlage findet im verdampferseitigen Brenner 4 eine katalytische Verbrennung eines zugeführten Gemischs aus einem Brennstoff, z.B. Methanol und/oder Wasserstoff, und einem sauerstoffhaltigen Gas, z.B. Luft, statt. Dabei kann insbesondere vorgesehen sein, im katalytischen Brenner 4 die Abgase einer Brennstoffzelle zu verbrennen, welcher das erzeugte Reformatgas anodenseitig zugeführt wird. Mit der dadurch erzeugten Wärme wird der mit dem Brenner 4 in Wärmekontakt stehende Verdampfer 1 auf seine erforderliche Betriebstemperatur aufgeheizt. Ein in den Verdampfer 1 eingeleitetes Methanol/Wasser-Gemisch wird dadurch in diesem verdampft und vorzugsweise überhitzt. Dieses Methanol/Wasserdampf-Gemisch gelangt in den Reformer 2, wo das Methanol reformiert und dadurch ein wasserstoffreiches Reformatgas mit einem gewissen CO-Anteil gebildet wird. Dieses Reformatgas gelangt von der Ausgangsseite des Reformers 2 in den eintrittsseitigen Verteilerkanal der kombinierten Oxidator/Brenner-Einheit 3, in welchen der zugeordnete Lufteinlaß 9 mündet, wobei dieser Verteilerkanal somit gleichzeitig als reformeraustrittsseitiger Sammelkanal fungiert. Von dort gelangt das Reformatgas zusammen mit einer einstellbaren Menge an über den Lufteinlaß 9 zudosiertem sauerstoffhaltigem Gas, wie Luft, in die parallelen Plattenschichten der kombinierten Oxidator/Brenner-Einheit 3. Dort wird das im Reformatgas enthaltene Kohlenmonoxid weitestgehend oxidiert, so daß die CO-Konzentration in dem über den Reformatgasauslaß 10 abgeführten Reformatgasstrom unter einem gewünschten Grenzwert, z.B. unterhalb vom 50 ppm, liegt.

Charakteristischerweise wird beim Betrieb der Anlage über den Lufteinlaß 9 ein Sauerstoffanteil in die kombinierte Oxidator/Brenner-Einheit zudosiert, der größer ist als der Sauerstoffanteil, welcher allein für diese selektive CO-Oxidation benötigt wird. Die übrige Sauerstoffmenge bewirkt nun eine Oxidation eines gewissen, geringen Teils des Wasserstoffs, aus dem das gebildete Reformatgas im wesentlichen besteht, sowie gegebenenfalls von noch im Reformatgas enthaltenem, nicht umgesetztem Methanol. Dieser katalytische Verbrennungsprozeß findet in der kombinierten Oxidator/Brenner-Einheit 3 folglich zusätzlich zur und gleichzeitig mit der CO-Oxidation statt. Durch den katalytischen Verbrennungsprozeß wird in der kombinierten Oxidator/Brenner-Einheit 3 genügend Wärme erzeugt, um den mit dieser Einheit 3 in Wärmekontakt stehenden Reformer 2 auf seiner für die Durchführung der Wasserdampfreformierungsreaktion geeigneten, erhöhten Betriebstemperatur zu halten, wozu die bei der CO-Oxidation freiwerdende Wärme allein nicht ausreicht. Die Sauerstoffzufuhr in die kombinierte Oxidator/Brenner-Einheit 3 wird so gesteuert oder geregelt, daß die in dieser Einheit 3 durch die CO-Oxidation und den katalytischen Verbrennungsprozeß erzeugte Wärme gerade den Wärmebedarf deckt, der nötig ist, um den Reformer 2 auf seiner optimalen Betriebstemperatur für vollständigen Methanolumsatz zu halten und die Wärmeverluste auszugleichen. Daraus folgt, daß die zugeführte Sauerstoffmenge, z.B. in Form einer entsprechend zudosierten Luftmenge, in Abhängigkeit von der Menge an in den Reformer 2 zugeführtem Methanol und Wasser eingeregelt wird Mit höherer Methanol- und Wasserzufuhr in den Reformer 2, d.h. höherem Umsatz im Reformer und damit höherer Anlagenbelastung, steigt die in die kombinierte Oxidator/Brenner-Einheit zuzugebende Sauerstoffmenge.

Ersichtlich besitzt die Reaktorbaueinheit von Fig. 1 einen extrem kompakten Aufbau bei gleichzeitiger Integration aller Komponenten, die für eine Wasserdampfreformierung von Methanol oder einem anderen Kohlenwasserstoff zur Bereitstellung eines im wesentlichen aus Wasserstoff bestehenden Reformatgases mit geringer CO-Konzentration benötigt werden, d.h. mit dem Verdampfer 1, dem Reformer 2 und einer CO-Entfernungseinheit in Form der kombinierten Oxidator/Brenner-Einheit 3. Jedes der beiden Module 5, 8 kann aus einer individuell festlegbaren Anzahl von Plattenschichtungen aufgebaut werden, so daß durch einfache Modifikationen eine optimale Anpassung an den jeweiligen Anwendungsfall möglich ist und unterschiedliche Leistungsklassen für jede der in die Reaktorbaueinheit integrierten Anlagenkomponenten realisierbar sind. Neben den gezeigten Modulen 5, 8 vom Plattenstapeltyp ist alternativ die Verwendung funktionell gleicher Module vom Rohrbündeltyp für eines oder beide Module 5, 8 möglich.

Bei der gezeigten Bauform der Module 5 und 8 wechseln im Plattenstapel jedes Moduls jeweils eine Plattenschicht der einen Anlagenkomponente mit einer Plattenschicht der anderen Anlagenkomponente ab, so daß das Verhältnis der Anzahl der Plattenschichten für die beiden Komponenten im wesentlichen 1:1 beträgt. Alternativ dazu sind je nach Bedarf modifizierte Module mit beliebigem anderem Verhältnis der Plattenschichtanzahl der beiden jeweiligen Anlagenkomponenten verwendbar.

Eine weitere Modifikation der gezeigten Reaktorbaueinheit besteht darin, der kombinierten Oxidator/Brenner-Einheit 3 eine oder mehrere gekühlte oder adiabatisch betriebene CO-Oxidatorstufen nachzuschalten.

In einer weiteren Modifikation der gezeigten Reaktorbaueinheit ist vorgesehen, sauerstoffhaltiges Gas, wie Luft, in den Reformer 2 selbst zudosieren zu können, um dort durch Verbrennung von Methanol und/oder Wasserstoff zusätzliche Wärme zur Durchführung der Reformierungsreaktion zu erzeugen.

Der kompakte Aufbau der Reaktorbaueinheit von Fig 1 hat nur einen geringen Platzbedarf und weist aufgrund der geringen Oberfläche niedrige Wärmeverluste auf. Es ergibt sich ein hoher Wirkungsgrad der Anlage, wozu auch beiträgt, daß die Abwärme der kombinierten Oxidator/Brenner-Einheit 3 zur Beheizung des Reformers 2 genutzt wird. Durch das geringe Volumen und die kurzen Gasströmungswege besitzt die Reaktorbaueinheit und damit die Anlage insgesamt eine vergleichsweise hohe Dynamik und ein schnelles Aufheizverhalten beim Kaltstart, wie es gerade auch für den mobilen Einsatz in brennstoffzellenbetriebenen Kraftfahrzeugen wegen den dort typischen, raschen Lastwechseln erwünscht ist, da die Gesamtmasse der Reaktorbaueinheit relativ niedrig ist und alle Anlagenkomponenten beheizt werden können. Der modulare Aufbau ermöglicht eine einfache Hochskalierung auf jedes gewünschte Leistungsvermögen der Anlage.

Fig. 2 zeigt eine Draufsicht auf eine Wärmeübertragerplatte 13, wie sie in der Reaktorbaueinheit von Fig. 1 für das Verdampfer/Brenner-Modul 5 und in weitestgehend ähnlicher Bauform für das andere Modul 8 verwendbar ist. An den gegenüberliegenden Plattenschmalseiten sind je zwei Öffnungen 14, 15, 16, 17 vorgesehen, wobei jeweils lagegleiche Öffnungen der im Stapel aufeinanderfolgenden Platten unter Bildung entsprechender Einlaß- oder Auslaßkanäle bzw. Verteiler- oder Sammelkanäle fluchtend überlappen. Bei der Platte 13 von Fig. 2 bildet das eine Paar sich diagonal gegenüberliegender Öffnungen 15, 17 einen Teil eines entsprechenden Sammel- bzw. Verteilerkanals beispielsweise des Verdampfers 1 und fungiert als Fluideinlaß- bzw. Fluidauslaß. Dabei gelangt das Fluid über den Einlaß in die Ebene der Platte 13 und strömt dort längs einer an der Platte 13 vorgesehenen Stütz- und Verteilerstruktur 18 zum gegenüberliegenden Auslaß, wobei es mit dem an der anderen Plattenseite entlangströmenden Medium, beispielsweise dem heißen Verbrennungsabgas des Brenners 4, in Wärmekontakt tritt. Die beiden anderen, in Fig. 2 dick umrahmt gezeichneten Öffnungen 14, 16 und der Plattenrand 19 bilden gasdichte Verbindungen, mit denen das jeweils andere Medium im Plattenstapel die betreffende Plattenschicht passieren kann. Diese Öffnungen 14, 16 können beispielsweise Teil des Brennereinlasses 6 bzw. des Brennerauslasses 12 sein.

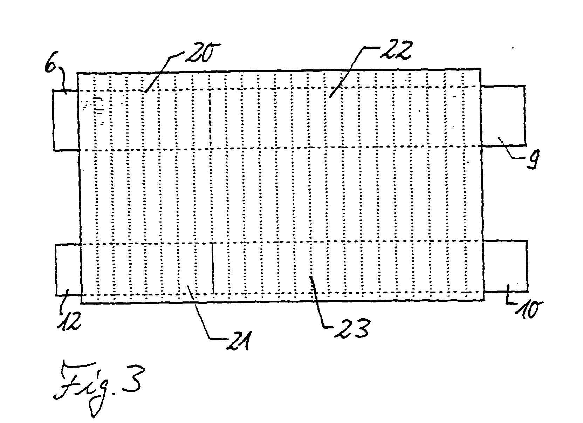

Fig. 3 zeigt in einer Draufsicht die kompakte Reaktorbaueinheit von Fig. 1 mit ihrer Plattenstapelbauweise, wobei in dieser Ansicht der Brennereinlaß 6 und der Brennerauslaß 12 am einen Stapelstirnende sowie der Lufteinlaß 9 und der Reformatgasauslaß 10 am anderen Stapelstirnende zu erkennen sind. Der Verdampfereinlaß 7 ist in dieser Ansicht vom Brennereinlaß 6 verdeckt. Zusätzlich ist die Erstreckung der zugehörigen Einlaß- oder Auslaßkanäle 20, 21, 22, 23, d.h. der zu den Ein- bzw. Auslässen 6, 9, 10, 12 gehörigen Verteiler- bzw. Sammelkanäle, in den Plattenstapelaufbau hinein gestrichelt angedeutet.

## Patentansprüche

1. Anlage zur Wasserdampfreformierung eines Kohlenwasserstoffs mit
- einem Reformer (2),
**gekennzeichnet durch**
- eine dem Reformer (2) nachgeschaltete, mit diesem in Wärmekontakt stehende, kombinierte Oxidator/Brenner-Einheit (3), die während des Reformierungsreaktionsbetriebs des Reformers sowohl als CO-Oxidator wie auch gleichzeitig als katalytischer Brenner fungiert.

2. Anlage nach Anspruch 1, weiter
**dadurch gekennzeichnet, daß**
- der Reformer (2) und die kombinierte Oxidator/Brenner-Einheit (3) als Modul (8) mit einer Wärmeübertragerstruktur in eine Reaktorbaueinheit vom Plattenstapeltyp und/oder Rohrbündeltyp integriert sind und
- in die Reaktorbaueinheit ein dem Reformer vorgeschalteter Verdampfer (1) und ein mit diesem in Wärmekontakt stehender katalytischer Brenner (4) als ein weiteres Modul (5) mit einer Wärmeübertragerstruktur integriert sind.

3. Anlage nach Anspruch 2, weiter
**dadurch gekennzeichnet, daß**
die beiden Module (5, 8) in der Reaktorbaueinheit durch thermisch isolierende Elemente voneinander getrennt angeordnet sind.

4. Anlage nach einem der Ansprüche 1 bis 3, weiter
**dadurch gekennzeichnet, daß**
der kombinierten Oxidator/Brenner-Einheit (3) wenigstens eine weitere CO-Entfernungsstufe ohne Brennerfunktion nachgeschaltet ist.

5. Verfahren zum Betrieb einer Anlage nach einem der Ansprüche 1 bis 4, bei dem
in die kombinierte Oxidator/Brenner-Einheit (3) ein sauerstoffhaltiges Gas mit einem Sauerstoffanteil zudosiert wird, der größer als der allein zur CO-Oxidation benötigte Sauerstoffanteil ist.

## Claims

1. Unit for the steam reforming of a hydrocarbon with
- a reformer (2),
**characterised by**
- a combined oxidiser/burner unit (3) connected downstream from the reformer (2) and in thermal contact with it, which during the operation of the reforming reaction in the reformer functions both as a CO oxidiser and at the same time as a catalytic burner.

2. Unit according to Claim 1,
further **characterised in that**
- the reformer (2) and the combined oxidiser/burner unit (3) are integrated as a module (8) having a heat transfer structure in a reactor assembly of the stacked-plates and/or the tube bundle type, and
- in the reactor assembly an evaporator (1) connected upstream from the reformer and a catalytic burner (4) in thermal contact therewith are integrated as another module (5) having a heat transfer structure.

3. Unit according to Claim 2,
further **characterised in that**
the two modules (5, 8) in the reactor assembly are arranged separated from one another by thermally insulating elements.

4. Unit according to any of Claims 1 to 3,
further **characterised in that**
downstream from the combined oxidiser/burner unit (3) is connected at least one further CO removal stage with no burner function.

5. Method for the operation of a unit according to any of Claims 1 to 4, in which a gas containing oxygen having an oxygen fraction larger than that required for CO oxidation alone, is fed quantitatively into the combined oxidiser/burner unit (3).

## Revendications

1. Installation de reformage à la vapeur d'eau d'un hydrocarbure comportant:
- un reformeur (2),
caractérisée par
- une unité oxydateur/brûleur combinée (3) montée en aval du reformeur (2), mis en contact thermique avec celui-ci, qui, pendant le fonctionnement de la réaction de reformage du reformeur, joue tant le rôle d'oxydateur du CO qu'également simultanément de brûleur catalytique.

2. Installation selon la revendication 1, caractérisée en outre en ce que
- le reformeur (2) et l'unité oxydateur/brûleur combinée (3) sont intégrés sous la forme de module (8) muni d'une structure à transfert de chaleur dans un ensemble de construction de réacteur du type à empilement de plaques et/ou du type à faisceau tubulaire, et
- dans l'unité de construction de réacteur sont intégrés un évaporateur (1), monté en amont du reformeur, et un brûleur catalytique (4), mis en contact thermique avec celui-ci, à titre de module (5) supplémentaire, ayant une structure de transfert de chaleur.

3. Installation selon la revendication 2, caractérisée en outre en ce que les deux modules (5, 8) sont disposés dans l'unité de construction de réacteur de façon séparée l'un de l'autre au moyen d'élémente isolants de la chaleur.

4. Installation selon l'une des revendications 1 à 3, caractérisée en outre en ce qu'au moins un autre étage d'élimination du CO, n'ayant pas de fonction de brûleur, est monté en aval de l'unité oxydateur/brûleur (3) combinée.

5. Procédé de fonctionnement d'une installation selon l'une des revendications 1 à 4, dans lequel un gaz contenant de l'oxygène, ayant une teneur en oxygène supérieure à la teneur en oxygène nécessaire pour obtenir l'oxydation du CO seule, est ajouté de façon dosée dans l'unité oxydateur/brûleur combinée (3).
